Europäisches Patentamt

(19) European Patent Office

Office européen des brevets

(11) Numéro de publication: **0 041 511**
**B1**

(12) **FASCICULE DE BREVET EUROPEEN**

(51) Int. Cl.³: **B 60 C 23/04,** B 60 C 23/00

(45) Date de publication du fascicule du brevet:
**11.01.84**

(21) Numéro de dépôt: **80902288.2**

(22) Date de dépôt: **10.12.80**

(86) Numéro de dépôt international:
**PCT/EP 80/00144**

(87) Numéro de publication internationale:
**WO 81/01688 (25.06.81** Gazette **81/15)**

(54) **DISPOSITIF COMPARATEUR DE PRESSION REFERENCEE POUR PNEU DE VEHICULE AVEC AFFICHAGE A DISTANCE.**

(30) Priorité: **13.12.79 FR 7931024**

(43) Date de publication de la demande:
**16.12.81 Bulletin 81/50**

(45) Mention de la délivrance du brevet:
**11.01.84 Bulletin 84/2**

(84) Etats contractants désignés:
**DE GB**

(56) Documents cités:
**FR - A - 2 314 062**
**US - A - 2 629 089**

(73) Titulaire: **SCHRADER S.A., 48, rue de Salins,**
**F-25300 Pontarlier (FR)**

(72) Inventeur: **ROSAZ, Guy, 20 Rue du Chateau Chastaing,**
**F-25300 Pontarlier (FR)**
Inventeur: **BADOZ, Jean-Marie, 78A, Rue de Besançon,**
**F-25300 Pontarlier (FR)**

(74) Mandataire: **Silhol, Christian Maurice Alfred, c/o**
**BUGNION S.A. Conseils en Propriété**
**Industrielle 10, route de Florissant Case Postale 375,**
**CH-1211 Genève 12 - Champel (CH)**

Dispositif comparateur de pression référencée pour pneu de véhicule avec
affichage à distance

L'invention concerne les dispositifs permettant de vérifier, sur le tableau de bord d'un véhicule, si la pression de l'air dans ses pneus ne varie pas par rapport à une pression de référence; elle a pour objet un dispositif comparateur de pression référencée pour pneu de véhicule avec affichage à distance.

Dans ce domaine, il existe plusieurs réalisations connues parmi lesquelles on peut citer celle qui fait l'objet du brevet FR 2 314 062 SCOVILL.

Il s'agit d'un dispositif pour mesurer et indiquer la pression de l'air dans un pneumatique de véhicule, ayant un interrupteur monté au voisinage de la roue raccordé à des moyens d'indication à l'intérieur du véhicule.

A l'emplacement d'un goujon de roue, est mis en place un corps tubulaire contenant un soufflet étanche, fixé audit corps par une de ses extrémités, l'autre étant libre et portant un aimant. Un tube extérieur relie le corps à la valve du pneu de façon que la pression régnant à l'intérieur du pneu soit la même que celle régnant autour du soufflet. Une pression de référence ayant préalablement été enfermée dans le soufflet, si la pression dans le pneu diminue, le soufflet s'étire et déplace l'aimant qu'il porte, parallèlement à l'axe de la roue, vers le centre du véhicule. L'aimant, ainsi rapproché de l'interrupteur, ferme le circuit et une lampe s'allume sur le tableau de bord.

Le brevet US 4 134 102 GENERAL MOTORS décrit un dispositif analogue dans lequel la pression de référence et les moyens de transmission sont placés à l'intérieur de la jante où ils sont soumis à des forces centrifuges importantes.

La demande de brevet FR 2 377 894 DUNLOP a pour objet un dispositif comparable, mais dans lequel le soufflet est remplacé par un ressort dont le tarage sert de mesure de référence.

Aucun des dispositifs cités ne permet de résoudre les problèmes posés:

— par l'interversion des roues avant-arrière dont les pressions de service sont rarement équivalentes,
— par l'adaptation de la pression de service des pneus d'un même véhicule aux conditions de roulement, aux variations de la charge d'un véhicule utilitaire, par l'utilisation d'un appareil standard sur les différents types de véhicules.

Le dispositif selon l'invention apporte une solution parce qu'il permet une adaptation de la pression de référence aux conditions d'utilisation, au moyen d'un gonflage simultané du pneu et de l'enceinte élastique dans laquelle on enferme, pour qu'elle serve de référence, la pression de gonflage du pneu.

A cette fin, ce dispositif, muni de moyens de transmission à distance de l'information recueillie, est constitué d'un corps creux, placé sur la jante, comportant un alésage borgne relié à l'intérieur du pneu par un conduit étanche; dans cet alésage, une enceinte extensible est fixée par une de ses extrémités et fermée par un obturateur, l'autre extrémité étant libre et fermée par un aimant, ladite enceinte délimitant dans l'alésage borgne deux chambres de volume variable, l'une desdites chambres, située à l'intérieur de l'enceinte, est destinée à renfermer la pression de référence tandis que l'autre, située à l'extérieur, reçoit la pression régnant à l'intérieur du pneumatique (ce dispositif correspond à celui décrit dans le document FR 2 314 062 précédemment cité).

Selon l'invention l'obturateur est muni d'une pièce de manœuvre, manipulée à l'extérieur du corps creux et une valve unique sert à établir, simultanément, la même pression dans l'enceinte et dans le pneu, la manœuvre de l'obturateur permettant d'enfermer dans l'enceinte la pression de gonflage afin qu'elle serve de pression de référence.

Le dispositif selon l'invention présente des avantages importants:

— une place de réglage étendue,
— une adaptation simple autant que rapide et efficace aux modifications des conditions de roulement telles par exemple, que la circulation rapide sur les autoroutes ou lente dans la boue, le sable, la neige, qui requièrent des pressions différentes.

D'autres avantages ressortiront de la description qui va suivre de modes de réalisation de l'invention, faite à titre d'exemples préférentiels mais non limitatifs, et du dessin dans lequel.

La figure 1 est une vue schématique en coupe d'une première forme d'exécution.

La figure 2 est une vue d'une deuxième forme d'exécution.

La figure 3 est une vue d'une troisième forme d'exécution.

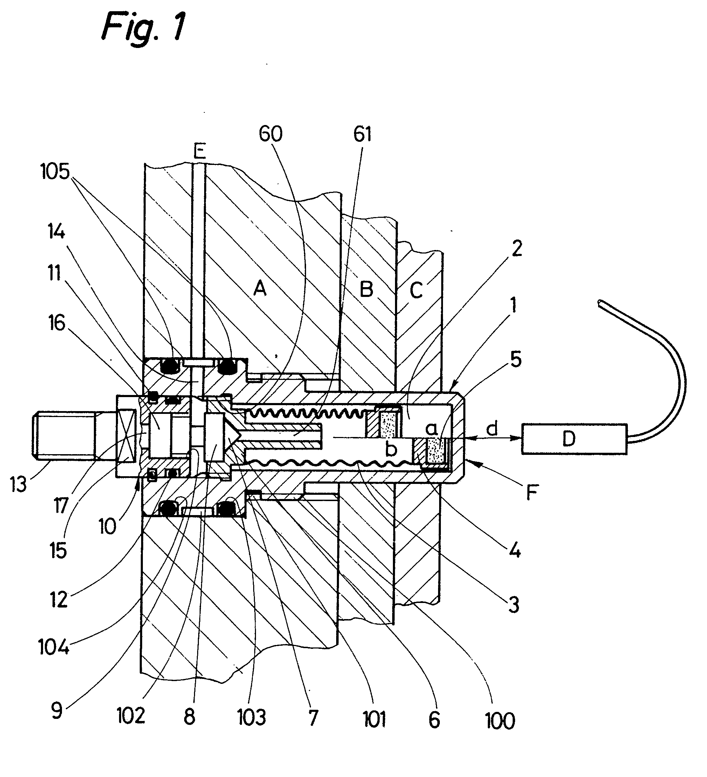

La figure 1 montre le dispositif constitué par un corps creux 1 placé près du moyeu d'une roue, sur la couronne des goujons de fixation, parallèlement à l'axe du moyeu et traversant la jante A, le flasque B et les freins C, l'extrémité borgne F du corps passant, à chaque tour de roue, devant un interrupteur D sensible à l'intensité d'un champ magnétique.

Le corps 1 comporte un alésage borgne 2 dont l'ouverture affleure la face extérieure de la jante A. Il est fixé sur la jante A par un épaulement fileté 100. Une gorge 101 sépare l'épaulement 100 d'un autre épaulement d'appui du corps 1 dans son logement de la jante A. Cet épaulement d'appui comporte deux gorges circulaires 103, 104 dans lesquelles sont placés des joints 105 assurant l'étanchéité du conduit E communiquant avec l'intérieur du pneumatique monté sur la jante A, de façon que la pression régnant dans l'alésage borgne 2 soit celle du pneu. Une enceinte extensible 3 délimite, à l'intérieur de l'alésage borgne 2, deux chambres à volume variable.

Cette enceinte comporte une extrémité libre, munie d'un support d'aimant 4 dans lequel est placé un aimant 5. Elle est fixée dans l'alésage borgne par son autre extrémité tenue par un support 6, rendu solidaire du corps 1 par un pas de vis 60 dans lequel des plats sont aménagés pour que la pression du pneu puisse s'établir autour de l'enceinte. L'orifice 61 du support 6 est fermé par le joint 7 d'un obturateur mobile 8.

L'obturateur mobile 8 est une pièce indépendante qui comporte une partie filetée 9 munie de plats pour le passage de l'air. Elle est vissée dans une pièce de manœuvre 10 de l'obturateur 8.

Cette pièce de manœuvre 10 ferme l'alésage borgne de manière étanche grâce à un anneau élastique 11 et un joint torique 12. Elle comporte un alésage concentrique à l'alésage borgne 2 mais ouvert des deux côtés et comportant plusieurs parties, un lamage 16 taraudé permet de visser l'obturateur 8; ce lamage est prolongé par un alésage taraudé 17 à l'intérieur duquel est placé un mécanisme de valve classique, la pièce de manœuvre 10 étant prolongée, à l'extérieur de la jante, par un tube de valve 13 sur lequel est placé un bouchon de valve. Des plats 15, disposés de part et d'autre du tube de valve 13 sur la partie de la pièce de manœuvre 10 émergeant de la jante A, permettent de manipuler l'obturateur 8 avec une clef. Un orifice 14 percé dans le corps 1 débouche dans une gorge 102 de circulation d'air communiquant avec un conduit E dans la jante A.

Lors de la fabrication des nouvelles jantes pour pneus sans chambre, ce conduit E sera réalisé pendant l'opération du moulage de la jante par l'introduction dans le moule, d'un dispositif créant un conduit tubulaire.

La présence d'une gorge 102, usinée dans le corps 1, évitera, au moment de la mise en place dudit corps sur la jante, toute manœuvre délicate visant à faire coincider l'orifice 14 avec l'ouverture du conduit E.

Le dispositif selon l'invention étant placé sur la roue et la roue sur son moyeu, on procèdera au gonflage du pneu, après avoir ouvert le support 6 par rotation de la pièce de manœuvre 10, en branchant le gonfleur sur le tube 13 préalablement débarrassé de son bouchon.

Lorsque la pression de service sera atteinte, on fermera le support 6 par une rotation inverse de la pièce de manœuvre 10. Cette pression de service, ainsi emprisonnée dans l'enceinte extensible 3, servira de pression de référence. L'équilibre des pressions dans les chambres à volume variable — alésage borgne 2 et enceinte extensible 3 — maintiendra l'aimant 5 dans la position a de la figure 1, c'est-à-dire à une certaine distance du fond F de l'alésage borgne 2.

Si la pression du pneu vient à diminuer, la pression de référence restant constante par définition, allongera l'enceinte 3 et rapprochera l'aimant 5 du fond F. Le champ magnétique, devenu plus intense au niveau de l'interrupteur, fermera le circuit et une lampe s'allumera sur le tableau de bord.

La différence entre la pression nominale et la pression de déclenchement du dispositif d'alarme est sensiblement constante, en effet, si K est la caractéristique liée à la pression et à l'allongement de l'enceinte 3, (par exemple: K=1 si la pression intérieure est supérieure de 1 bar à la pression extérieure, l'allongement de l'enceinte est de 1 mm).

$Pi$ = pression régnant à l'intérieur de l'enceinte

$Pp$ = pression du pneu régnant dans l'alésage borgne

$Po$ = pression initiale de gonflage

$\Delta 1$ = allongement de l'enceinte

$S$ = section équivalente

$Vo$ = volume initial lorsque Pi est égal à Pp on a

$$Pi - K \cdot \Delta l = Pp, \qquad (1)$$

$$Pi = \frac{Po \cdot Vo}{Vo + \Delta l \cdot S} \qquad (2)$$

(1) et (2) donnent

$$\frac{Po \cdot Vo}{Vo + \Delta l\, S} - K \cdot \Delta l = Pp,$$

$Pp = Pd$ = pression de déclenchement quand la course est telle que la distance d — aimant 5 interrupteur D — est suffisament faible pour fermer l'interrupteur; on a

$$Pd = \frac{Po \cdot Vo}{Vo + \Delta l\, S} - K \cdot \Delta l$$

$10$ = longueur de l'enceinte au repos (position a de la figure 1) si

$$\Delta l = \frac{10}{10}$$

pour obtenir la fermenture du circuit,

$$Pd = \frac{Po \cdot 10 \cdot S}{10 \cdot S + \frac{10}{10}} - K \cdot \Delta l = \frac{Po \cdot 10}{10 + 1} - K \cdot \Delta l$$

$$Pd = \frac{Po \cdot 10}{11} - K \cdot \Delta l \# Po - \Delta l \cdot K$$

Ce dispositif possède une plage de réglage importante, l'aimant peut se déplacer selon l'allongement ou la compression de l'enceinte extensible 3.

L'enceinte extensible 3 de référence étant gonflée avec le même gaz que le pneu, les variations de pression en fonction de la température sont proportionnelles. Il en résulte une auto-compensation qui évite un déréglage de l'appareil à la suite de variations importantes de la température.

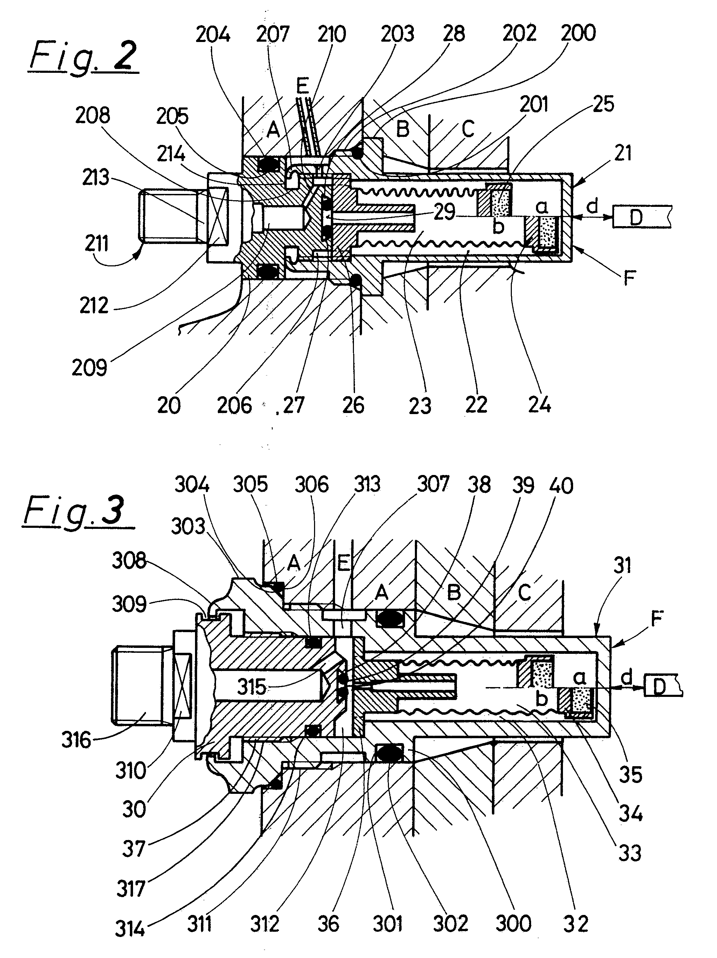

Dans une seconde forme de réalisation représentée par la figure 2, le corps 21 comporte également un alésage borgne 22, une enceinte extensible 23 munie d'un support d'aimant 24 avec un aimant 25 sur son extrémité libre, l'autre extrémité étant fixée dans l'alésage par un support 26 qui la rend solidaire du corps 21.

Les moyens de fermeture du support 26 de l'enceinte 23 sont placés directement sur la face conjuguée 28 d'une pièce de manœuvre 20; ils sont constitués par un joint circulaire 27 placé dans un logement 29 aménagé dans la face 28; le contact entre les faces conjuguées de l'obturateur intervient de façon que soit évité un écrasement excessif dudit joint.

Le corps 21 comporte un épaulement 200 qui doit s'insérer dans un logement correspondant du flasque B, de façon que la jante A, serrée par les goujons, emprisonne le corps 21.

Un joint circulaire 201 placé dans une gorge séparant l'épaulement 200 d'un autre épaulement 202 qui bloque le corps 21 dans un trou de la jante, aussure l'étanchéité nécessaire au passage de la pression du pneu par le conduit E dans l'alésage borgne 22 au moyen d'un orifice 203 ouvert à ce niveau du corps 21, en coopération avec un joint circulaire 204 placé dans une gorge 205 de la pièce de manœuvre 20.

Le corps 21 comporte un lamage 206, taraudé dans sa partie ouverte, recevant la pièce de manœuvre 20 qui s'y visse; le rebord périphérique 207 de ce lamage 206 est aminci.

La pièce de manœuvre 20 comporte une gorge 208 et une face d'appui 214 contre le rebord 207 ayant une surface légèrement concave.

En vissant la pièce de manœuvre 20 dans le lamage 206 du corps 21, on provoque le sertissage de la pièce de manœuvre qui incurve le rebord 207 dans la gorge 208.

Il est précisé que la zone de sertissage est située entre les joints d'étanchéité 201 et 204 précités de façon que la pièce de manœuvre 20 soit maintenue pivotante dans le corps creux 21.

La pièce de manœuvre 20 comporte également un alésage 209 communiquant avec le lamage 206 par un orifice 210; un mécanisme de valve est placé dans cet alésage prolongé par un tube fileté 211 sur lequel on visse un bouchon. Des plats 212, diamétralement disposés de part et d'autre de l'embase de gonflage 213, permettent la fermeture du support 26, par conséquent de l'enceinte 23.

La figure 3 représente une autre variante du dispositif dans laquelle la zone de sertissage de la pièce de manœuvre 30 est placée en dehors de la jante A.

Le corps creux 31 comporte, au niveau du support 36, un épaulement 300, dans lequel est creusée une gorge 301 contenant un joint circulaire 302; cet épaulement affleure la face interne de la jante A, appliquée par les goujons contre le flasque B. A l'opposé, émergeant de la face externe de la jante A, un collet 303 comporte, vers l'intérieur de la jante, un chanfrein 304 emprisonnant un joint d'étanchéité 305 placé dans une rainure circulaire 306 de la jante A. Les joints 302 et 305 coopèrent pour maintenir l'étanchéité du conduit E en communication avec l'alésage borgne 33 par un orifice 307.

Le bord périphérique extérieur 308 du collet 303 est rabattu dans une gorge 309 de la pièce de manœuvre 30 qu'il rend solidaire du corps 31 tout en autorisant sa rotation au moyen des plats 310 pour commander l'ouverture ou la fermeture du support 36. Un épaulement 311 renforce la fixation du corps 31 dans la jante entre les joints d'étanchéité 203 et 305.

L'étanchéité de la pièce de manœuvre 30 dans le lamage 312 du corps 31 est assurée par un joint circulaire 313 placé dans une gorge 314 de la pièce de manœuvre.

La pièce de manœuvre 30 comporte un mécanisme de valve 316 obturé par un bouchon, sa communication avec l'alésage borgne 32 est assurée par un orifice 315.

L'extrémité (38) de la pièce de manœuvre opposée à la valve 316 forme l'obturateur (38) proprement dit lorsqu'une rotation, au moyen des plats 310, fait avancer l'obturateur 38, muni d'un joint 39 dans une gorge 40, par vissage du pas de vis 37 dans le taraudage 317 correspondant du corps creux 31.

## Revendications

1. Dispositif de comparaison permanente de la pression régnant à l'intérieur d'un pneumatique d'un véhicule par rapport à une pression de référence, muni de moyens de transmission à distance des informations recueillies, ce dispositif étant constitué d'un corps creux (1, 21, 31) place sur une jante (A) et comportant notamment un alésage borgne (2, 22, 32) relié à l'intérieur du pneu par un conduit étanche (E), une enceinte extensible (3, 23, 33) étant fixée dans cet alésage par une de ses extrémités (6, 26, 36) et fermée par un obturateur (8, 28, 38), l'autre extrémité (2, 24, 34) étant libre et fermée par un aimant (5, 25, 35), ladite enceinte délimitant dans l'alésage borgne deux chambres de volume variable, l'une desdites chambres, située à l'intérieur de l'enceinte, étant destinée à renfermer la pression de référence, tandis que l'autre, située à l'extérieur reçoit la pression régnant à l'intérieur du pneumatique, caractérisé par le fait que l'obturateur (8, 28, 38) est muni d'une pièce de manœuvre (10, 20, 30) manipulée à l'extérieur du corps creux (1, 21, 31) et par le fait qu'une valve unique (13, 211, 316) sert à établir, simultanément, la même pression dans l'enceinte et dans le pneu, la manœuvre de l'obturateur permettant d'enfermer dans l'enceinte, la pression de gonflage afin qu'elle serve de pression de référence.

2. Dispositif de comparaison selon la revendication 1 caractérisée par le fait que l'enceinte extensible (3) est fixée dans l'alésage borgne (2) par un support (6) constituant le siège de l'obturateur (8), par le fait que ce support comporte un pas de vis (60) muni de plats qui permettent de mettre en communication les deux parties de l'alésage borgne situées de part et d'autre dudit support, et par le fait qu'un orifice (61) dudit support (6) fait communiquer la chambre située à l'intérieur de l'enceinte extensible avec la chambre située à l'extérieur lorsque l'obturateur est dans la position ouverte.

3. Dispositif de comparaison selon la revendication 2 caractérisé par le fait que la pièce de manœuvre (10) de l'obturateur (8) ferme l'alésage borgne (2) de manière étanche au moyen d'un anneau élastique (11) et d'un joint torique (12), par le fait que ladite pièce de manœuvre comporte un alésage concentrique à l'alésage borgne mais ouvert des deux côtés, ledit alésage comportant plusieurs parties, notamment un lamage (16) taraudé dans lequel est vissé l'obturateur (8), ledit lamage étant prolongé, à l'intérieur de la pièce de manœuvre (10) par un alésage taraudé (17) à l'intérieur duquel est placé un mécanisme de valve classique et un tube de valve (13) fermé par un bouchon de valve.

4. Dispositif de comparaison selon la revendication 3 caractérisé par le fait que l'obturateur (8) est une pièce indépendante qui comporte une partie filetée (9) munie de plats pour le passage de l'air, par le fait que ledit obturateur est vissé dans la pièce de manœuvre (10), et par le fait que des plats (15) disposès de part et d'autre du tube de valve (13) sur la partie de la pièce de manœuvre (10) émergeant de la jante (A) permettent de manipuler l'obturateur (8) à l'intérieur du corps creux (1).

5. Dispositif de comparaison selon la revendication 4, caractérisé par le fait que le corps creux 1 comporte une gorge circulaire (102) située entre deux joints d'étanchéité (105) mettant en communication le pneu, par le conduit (E), et l'alésage borgne, par un orifice prévu à cet effet.

6. Dispositif de comparaison selon la revendication 1, caractérisé par le fait que les moyens de fermeture de l'enceinte extensible (32) sont placés directement sur la face conjuguée (28) de la pièce de manœuvre (20) et sont constitués, en particulier, par un logement (29) concentrique à l'orifice du support (26), contenant un joint (27), le contact entre les faces conjuguées de l'obturateur intervenant de façon que soit évité un écrasement excessif dudit joint.

7. Dispositif de comparaison selon la revendication 1, caractérisé par le fait que le corps (21) comporte un lamage (206) taraudé dont le rebord périphérique (207) est aminci, par le fait que la pièce de manœuvre (20) comporte une gorge (208) et une face d'appui (214) contre ledit rebord ayant une forme légèrement concave, de façon qu'en vissant la pièce de manœuvre dans le lamage on provoque le sertissage de la pièce de manœuvre dans le corps creux (21) en incurvant le rebord (207) dans la gorge (208), la zone de sertissage étant située entre des joints d'étanchéité (201, 204).

8. Dispositif de comparaison selon la revendication 1, caractérisé par le fait que le corps creux comporte un épaulement circulaire (200) devant être encastré dans un logement correspondant du flasque (B) supportant la roue, de façon que la jante (A) emprisonne ledit corps par serrage des écroux de fixation.

## Patentansprüche

1. Vorrichtung zum ständigen Vergleich des Druckes im Innern eines Fahrzeugluftreifens gegenüber einem Bezugsdruck mit einer Einrichtung zur Fernübertragung der erhaltenen Informationen und mit einem an einer Radfelge (A) sitzenden Hohlkörper (1; 21; 31), bei dem eine einseitig geschlossene Ausbohrung (2; 22; 32) mit dem Innern des Luftreifens über eine dichte Leitung (E) verbunden ist und einen dehnbaren Balg (3; 23; 33) enthält, der an einem seiner Enden (6; 26; 36) fest in dieser Ausbohrung angeordnet und durch einen Verschluß (8; 28; 38) verschlossen ist, an seinem anderen Ende (4; 24; 34) jedoch frei beweglich und mittels eines Magneten (5; 25; 35) verschlossen ist, wodurch dieser Balg in der Ausbohrung zwei Kammern mit veränderbarem Volumen trennt, von denen die Kammer im Innern des Balges den Bezugsdruck einschließt, während die andere äußere Kammer unter dem gleichen Druck wie im Innern des Luftreifens steht, dadurch gekennzeichnet, daß der Verschluß (8; 28; 38) mit einem Betätigungsstück (10; 20; 30) versehen ist, welches von außerhalb des Hohlkörpers (1; 21; 31) zugänglich ist, und daß ein einziges Ventil (13; 211; 316) dazu dient, gleichzeitig den gleichen Druck in dem Balg und dem Luftreifen aufzupumpen und die Betätigung des Verschlusses ermöglicht, in dem Balg den Aufpumpdruck einzuschließen, welcher als Bezugsdruck dient.

2. Vergleichsvorrichtung nach Anspruch 1, dadurch gekennzeichnet, daß der dehnbare Balg (3) in der Ausbohrung (2) mittels eines Trägers (6) befestigt ist, welcher den Sitz des Verschlusses (8) bildet, daß dieser Träger mit einem Schraubengewinde (60) mit Abflachungen versehen ist, welche eine Verbindung zwischen den beiden Teilen der Ausbohrung beiderseits des Trägers ermöglichen, und daß eine Öffnung (61) in dem Träger (6) die Kammer im Innern des dehnbaren Balges mit der äußeren Kammer verbindet, sobald der Verschluß sich in seiner offenen Stellung befindet.

3. Vergleichsvorrichtung nach Anspruch 2, dadurch gekennzeichnet, daß das Betätigungsstück (10) des Verschlusses (8) die Ausbohrung (2) mittels eines elastischen Ringes (11) und eines O-Ringes (12) dicht verschließt, daß dieses Betätigungsstück mit einer zur Ausbohrung konzentrischen, jedoch an beiden Seiten offenen Bohrung versehen ist, welche mehrere Abschnitte aufweist, insbesondere einen Gewindeabschnitt (16), in den der Verschluß (8) eingeschraubt und der bis in das Innere des Betätigungsstückes (10) durch eine Gewindebohrung (17) verlängert ist, in welcher ein üblicher Ventilmechanismus und ein von einer Ventilkappe verschlossener Ventilnippel (13) sitzen.

4. Vergleichsvorrichtung nach Anspruch 3, dadurch gekennzeichnet, daß der Verschluß (8) ein unabhängiger Teil ist, welcher einen Gewindeabschnitt (9) mit Abflachungen zum Luftdurchgang trägt, daß dieser Verschluß in das Betätigungsstück (10) eingeschraubt ist und daß Abflachungen (15) beiderseits des Ventilnippels (13) an dem aus der Radfelge (A) herausstehenden Teil des Betätigungsstückes (10) die Verstellung des Verschlusses (8) im Innern des Hohlkörpers (1) ermöglichen.

5. Vergleichsvorrichtung nach Anspruch 4, dadurch gekennzeichnet, daß der Hohlkörper (1) eine Ringnut (102) zwischen zwei Abdichtungen (105) aufweist, womit der Luftreifen über die Leitung (E) und die Ausbohrung über eine hierfür vorgesehene Öffnung miteinander verbunden sind.

6. Vergleichsvorrichtung nach Anspruch 1, dadurch gekennzeichnet, daß die Verschlußeinrichtung des ausdehnbaren Balges (23) unmittelbar an der Verbindungsseitenfläche (28) des Betätigungsstückes (20) angeordnet ist und insbesondere aus einer zur Öffnung des Trägers (26) konzentrischen Ausnehmung (29) mit einer Dichtung (27) besteht, wobei der Kontakt zwischen den Verbindungsflächen des Verschlusses so ist, daß ein übermäßiges Zusammendrücken dieser Dichtung vermieden wird.

7. Vergleichsvorrichtung nach Anspruch 1, dadurch gekennzeichnet, daß der Hohlkörper (21) einen Gewindeabschnitt (206) aufweist, dessen Umfangsrand (207) dünner ausgebildet ist, und daß das Betätigungsstück (20) eine Nut (208) und eine Anschlagsfläche (214) für diesen Rand mit einer leicht konkaven Form aufweist, so daß man beim Einschrauben des Betätigungsstückes in den Gewindeabschnitt das Eingreifen des Betätigungsstückes in den Hohlkörper (21) durch Umbiegen des Randes (207) in die Nut (208) bewirkt, wobei der Eingriffbereich zwischen Dichtungsringen (201, 204) liegt.

8. Vergleichsvorrichtung nach Anspruch 1, dadurch gekennzeichnet, daß der Hohlkörper eine Ringschulter (200) aufweist, welche in eine entsprechende Ausnehmung an dem das Rad tragenden Flansch (B) so einzusetzen ist, daß die Felge (A) diesen Hohlkörper durch Anziehen der Befestigungsmuttern festhält.

## Claims

1. A device for constantly comparing the pressure prevailing inside the tire of a vehicule in relation to a reference pressure, which comprises means for the remote transmission of the data thus obtained, this device consisting of a hollow body (1, 21, 31) fitted in a wheel rim (A) and provided notably with a blind bore (2, 22, 32) connected to the inner space of the tire via an air-tight passage (E), an extensible bellows (3, 23, 33) secured in said blind bore at one of its ends (6, 26, 36) and closed by a valve member (8, 28, 38), the other end (4, 24, 34) of said bellows being free and closed by a permanent magnet (5, 25, 35), said bellows dividing said blind bore into two variable-capacity chambers, one of said chambers, formed inside said bellows, being adapted to receive said reference pressure while the other chamber formed externally of said bellows is exposed to the pressure obtaining inside the tire, wherein said valve member (8, 28, 38) is provided with a control member (10, 20, 30) actuatable from the exterior of said hollow body (1, 21, 31), and a single valve (13, 211, 316) is provided for causing the same pressure to prevail within bellows and said tire, the actuation of said valve member permitting of maintaining the inflation pressure in said bellows so that it may be used as a reference pressure.

2. A comparison device according to Claim 1, wherein said extensible bellows (3) is secured in said blind bore (2) by means of a support member (6) constituting the seat of said valve member (8), said support member (6) having a screw-threaded portion (60) provided with flat faces permitting the communication between the two portions of the blind bore which are formed on either side of said support member, an orifice (61) formed in said support member interconnecting the inner chamber of said extensible bellows and the chamber formed externally of said bellows when said valve member is in its open position.

3. The comparison device of Claim 2, wherein said member (10) for actuating said valve member (8) is adapted to close tightly said blind bore (2) with the assistance of a resilient ring (11) and a toric seal (12), said actuating member comprising a bore concentric to said blind bore but open on both sides, said bore comprising several sections, notably a chambered and internally threaded section (16) in which a threaded portion of said valve member (8) is engaged, said chambered section having an extension of smaller diameter, within said actuating member (10), which comprises a threaded bore for receiving a conventional tire valve and a valve tube (13) closed by a valve cap.

4. The comparison device of Claim 3, wherein said valve member (8) is a separate member comprising a screw-threaded portion (9) formed with flat faces permitting the passage of air, said valve member being screwed in said actuating member (10), other flat faces (15) being formed on either side of the valve tube (13) on that portion of said actuating member which projects from the wheel rim surface (A) to permit the actuation of said valve member (8) inside said hollow body (1).

5. The comparaison device of Claim 4, wherein said hollow body (1) comprises a circular groove (102) disposed between two seals (105) for interconnecting the tire via said passage (E) and said blind bore through an orifice provided for this purpose.

6. The comparison device of Claim 1, wherein means for closing said extensible bellows (23) are provided directly on the conjugate face (28) of said actuating member (20) and consist notably of a chambered portion (29) concentric to the orifice of said support member (26) and containing a seal (27), the mutual engagement between the conjugated faces of said valve member preventing the excessive crushing of said seal.

7. The comparison device of Claim 1, wherein said body (21) comprises a screw-threaded chambered portion (206) having a relatively thin peripheral lip (207), said actuating member (20) comprising a groove (208) and a bearing face (214) of slightly concave configuration which engages said lip, whereby when said actuating member is screwed into said chambered section (206) of said body (21) said actuating member is crimped in said hollow body (21) by causing said peripheral lip (207) to be curved inwardly into said groove (208), the crimping area being located between said seals (201, 204).

8. The comparison device of Claim 1, wherein said hollow body (21) comprises a circular flange (200) adapted to be fitted in a corresponding cavity formed in the wheel-supporting flange (B), whereby the wheel rim (A) holds said body in position as a consequence of the tightening of the wheel mounting nuts.

# Fig. 1

Fig. 2

Fig. 3